# EUROPEAN PATENT SPECIFICATION

(11) **EP 1 843 520 B1**
(45) Date of publication and mention of the grant of the patent: **19.12.2012**
(21) Application number: 04802549.8
(22) Date of filing: 28.12.2004
(51) Int. Cl.: H04L 12/24

(54) **A METHOD AND DEVICE FOR CONTROLLING THE CONFIGURATION OF CONFIGURATION PARAMETER SET OF THE REMOTE DEVICE**
VERFAHREN UND EINRICHTUNG ZUR STEUERUNG DER KONFIGURATION EINES KONFIGURATIONSPARAMETERSATZES DER FERNEINRICHTUNG
PROCEDE ET DISPOSITIF PERMETTANT DE CONTROLER LA CONFIGURATION D'UNE SERIE DE PARAMETRES DE CONFIGURATION DU DISPOSITIF DISTANT

(43) Date of publication of application: 10.10.2007
(73) Proprietor: ZTE Corporation, Shenzhen, Guangdong 518057 (CN)
(72) Inventor: YANG, Wenjun, ZTE Plaza, Keji Road South, 518057 Shenzhen, Guangdong Province (CN)
(74) Representative: Dr. Weitzel & Partner
(86) International application number: PCT/CN2004/001537
(87) International publication number: WO 2006/069472

(56) References cited:
- WO-A1-99/21336
- WO-A1-03/021415
- WO-A1-03/079216
- WO-A1-03/098462
- US-A1- 2003 014 745
- US-B1- 6 308 205
- US-B1- 6 647 494

## Description

### TECHNICAL FIELD

This invention relates to a method for controlling the configuration of configuration parameter sets for remote devices in a network, and particularly to the controlling of the automatic configuration of the parameter sets for the remote terminal devices used by users in the communication field.

### BACKGROUND

As network technology is developing into the next generation gradually, the remote devices (as opposed to central office equipment) located on the users' side are also developing digitally and intelligently. The use of this kind of devices requires more complex configuration and therefore, brings about heavier workloads of maintenance. The operators have to configure and manage parameters, predetermined by their services, of the users' remote terminal devices, in order to make the users with different technical skills use their devices normally. These configuration parameters, referred to as a configuration parameter set, are considered as a set of various data.

Typically, the remote devices have initial configuration, however, this configuration is not unchangeable because the operators may update or reconfigure the configuration of the remote devices located on the users' side, to meet the need for services. At present, two methods are used to achieve this task: one is a manual method, which needs to manually intervene the whole process of the configuration of the remote devices and then, although the configuration people do not need to reach the locations of the remote devices, their workloads are still very heavy; the other is an automatic method, that is, the operators employ the configuration parameter set to automatically and necessarily configure the remote terminal devices before the users start up the terminals and use the networking service. In the existing methods, if the configuration parameters of the operators' remote devices are configured and managed automatically, it is needed that the operators' management systems use the configuration parameter set to configure the users' terminal devices once, through negotiation mechanisms, whenever the users' terminal devices start up. Due to a large number of users' terminal devices existing on the networks, there may be many of the users' terminal devices needed to be configured at the same time, and a variety of laws of using such terminal devices. In order to guarantee the configuration's reliability, the management systems and networks designed by the operators will be required to process a very heavy workload on management information. Although peak load does not exist all the time, managing the large configuration may cause relatively high costs.

Document WO 03/021415 A1 discloses a system and method for modeling a network device's configuration, wherein such a system could include, for example, a CLI-to-XML converter connected to a schema storage device or a CLI-to-XML converter in combination with document object model (DOM) generator.

### SUMMARY

The purpose of the present invention is that, on the basis of the existing automatic management, there are provided a method and apparatus for controlling the configuration of configuration parameter sets of remote devices. The present invention can lessen the load on management information because of the frequent configuration of the remote devices, thereby lowering the costs of an operator for managing the remote devices.

Typically, although there are a large number of remote terminal devices in the network, the configuration of the remote terminals is relatively stable, not changed regularly and frequently. Hence, the invention adopts such a technical solution, which uses a unique identifier to identify a current configuration parameter set of a remote terminal device. The identifier varies with the content of the configuration parameter set. So, the remote device, after starting, compares its own identifier of the configuration parameter set with the identifier of the configuration parameter set already stored in the configuration management server. The configuration management server updates the configuration of the remote device only when the two identifiers are not the same, otherwise, the remote device operates with the original configuration. Because the interaction of the identifiers relatively significantly reduces the management flow of the network, the frequency of the configuration is efficiently lessened at the startup of the terminal.

For the above described purpose, the invention provides a method for controlling the configuration of configuration parameter sets of remote devices, wherein said method is used for the configuration management server to control the configuration of the parameters, and wherein said method further uses identifiers to identify the current configuration parameter sets of the remote terminal devices, the identifiers varying with the contents of the configuration parameter sets, thereby controlling whether or not the remote devices are configured based on whether or not the corresponding identifiers varied.

The above method in accordance with the invention includes the following steps:
a) each unique identifier is set up for each of the corresponding configuration parameter sets of the remote devices, and these identifiers are stored on the side of said configuration management server and in the corresponding positions on the side of the remote devices, respectively;
b) if said configuration management server requires updating the configuration of a remote device, then it updates said remote device's configuration parameter set and modifies said identifier of said remote device's configuration parameter set stored on the side of said configuration management server; and
   if said configuration management server does not require updating said configuration of said remote device, then it keeps unchanged the originally stored identifier of said remote device;
c) said remote device, after starting, sends said current identifier of said configuration parameter set of its own to said configuration management server;
d) on the side of said configuration management server, an identifier of said remote device's configuration parameter set being received from the outside is compared with that of said remote device's configuration parameter set stored on the side of said configuration management server; and
   if the two identifiers are the same, then it is not necessary to update said configuration of said remote device; and
   if the two are not the same, then said configuration management server transmits a new configuration parameter set to said remote device, updates said configuration of said remote device and further updates said identifier on the side of the remote devices.

The above method in accordance with the invention, in d), said remote device sends to said configuration management server a response upon completion of said configuration when finishing updating said configuration, and said configuration management server repeats transmission for a set number of times if not receiving said response upon completion of said configuration of said remote device.

The above method in accordance with the invention, in a), it sets up a different identifier for each of the configuration parameter sets of the remote devices from others and stores these identifiers on the side of said configuration management server, as well as storing them in the corresponding positions on the side of the remote devices, respectively; in b), if said configuration management server requires updating the configuration of a remote device, then it updates said configuration parameter set of said remote device, generates a new identifier for said new configuration parameter set on the side of said configuration management server, and replaces with said new identifier the original one of said remote device stored on the side of said configuration management server; and if said configuration management server does not require updating said configuration of said remote device, then it keeps unchanged the originally stored identifier of said remote device; in d), on the side of said configuration management server, if an identifier of said remote device's configuration parameter set which is being received from the outside, is not the same as that of said remote device's configuration parameter set which is stored thereon, then said configuration management server transmits both the new configuration parameter set and the corresponding, new identifier to said remote device, updates said configuration of said remote device and stores said new identifier on the side of the remote devices, and said remote device, after its configuration is updated, sends to said configuration management server a response upon completion of said configuration, and said configuration management server repeats transmission for a set number of times if not receiving said response upon completion of said configuration of said remote device.

The above method in accordance with the invention, in a), it sets up identifiers for the configuration parameter sets of the remote devices and stores these identifiers on the side of the remote devices, as well as storing them on the side of said configuration management server; in b), if said configuration management server requires updating the configuration of a remote device, then it modifies both said remote device's configuration parameter set stored on the side of said configuration management server and said identifier of said remote device's configuration parameter set stored on the side of said configuration management server, e.g., to 0; and if said configuration management server does not require updating said configuration of said remote device, then it keeps unchanged the originally stored identifier of said remote device on the side of said configuration management server; In d), on the side of said configuration management server, if an identifier of said remote device's configuration parameter set which is being received from the outside, is not the same as that of said remote device's configuration parameter set which is stored thereon, then said configuration management server transmits to said remote device a new configuration parameter set as well as updating said configuration of said remote device, and then said remote device, after its configuration, generates a new identifier for said new configuration parameter set on the side of the remote devices and returns said new identifier to said configuration management server as a response upon completion of said configuration and stores it on the side of said configuration management server, and said configuration management server repeats transmission for a set number of times if not receiving said response upon completion of said configuration of said remote device. Due to the conflict between the identifiers, the new identifier of said remote device may be stored, together with the position information of said remote device.

The present invention further provides a corresponding apparatus for controlling the configuration of configuration parameter sets of remote devices, characterized in that it uses identifiers to identify the current configuration parameter sets of the remote devices, wherein the identifiers vary with the contents of the configuration parameter sets; thus controlling, by said configuration management server, whether or not the remote devices are configured based upon whether or not the identifiers varied.

The apparatus according to the invention, has identifier storage modules and identifier comparison modules set up on the side of said configuration management server, whereas it has identifier storage and transmission modules set up on the side of the remote devices, wherein: identifier storage modules for storing identifiers of configuration parameter sets of remote devices, identifier storage and transmission modules for storing identifiers of configuration parameter sets of remote devices and further for, after a remote device starts, sending to an identifier comparison module said current identifier of said configuration parameter set of said remote device, and identifier comparison modules for comparing an identifier of a remote device's configuration parameter set being received from the outside against that of said remote device's configuration parameter set stored in an identifier storage module; and if said configuration management server requires updating the configuration of a remote device, then it updates said remote device's configuration parameter set and modifies said identifier of said remote device's configuration parameter set stored on the side of said configuration management server; and if said configuration management server does not require updating the configuration of said remote device, then it keeps unchanged the originally stored identifier of said remote device; and if the two identifiers are identical in comparison in said identifier comparison module, then said configuration management server is not necessary to update the configuration of said remote device; and if the two are not identical in comparison, then said configuration management server transmits said new configuration parameter set to said remote device, updates the configuration of said remote device and further updates said identifier of said remote device stored in said identifier storage and transmission module, thereby making said updated identifier identical to that of said remote device stored in said identifier storage module.

The apparatus according to the invention, may have an identifier update module set up on the side of said configuration management server, if said configuration management server requires updating the configuration of a remote device, then said identifier update module generates a new identifier for said new configuration parameter set of said remote device, and replaces with said new identifier the original one of said remote device stored in said identifier storage module; and if the two identifiers are the same, then said configuration management server does not require updating the configuration of said remote device; and if the two are not the same, then said configuration management server transmits the new configuration parameter set to said remote device and, said identifier update module sends said new identifier of said remote device to an identifier storage and transmission module and updates said configuration of said remote device and stores said new identifier in said identifier storage and transmission module, and said remote device, after its configuration is updated, sends to said configuration management server a response upon completion of said configuration, and said configuration management server repeats transmission for a set number of times if not receiving said response upon completion of said configuration of said remote device. Therein, said identifier storage module, said identifier update module and said identifier comparison module may be located within the configuration management server, whereas said identifier storage and transmission module may be located within said remote device.

The apparatus according to the invention, may also have an identifier update module set up on the side of the remote devices, for generating new identifiers for new configuration parameters of the remote devices; if the two identifiers are the same, compared in said identifier comparison module, then said configuration management server does not require updating the configuration of said remote device; and if the two are not the same, then said configuration management server transmits said new configuration parameter set to said remote device and updates said configuration of said remote device, and said identifier update module, after the configuration of said remote device is updated, generates a new identifier for said new configuration parameter and returns said new identifier to said configuration management server as a response upon completion of said configuration and stores said new identifier in said identifier storage and transmission module. Therein, said identifier storage module and said identifier comparison module may be located in the configuration management server, whereas said identifier update module and said identifier storage and transmission module may be located in said remote device.

For this invention, it should be noted that, if the configuration management server is not able to directly communicate with the remote devices, then a router is required for proxy. The processing of the proxy may be referenced from many core ideas and further, it is readily understandable and achievable for the skilled in the art.

Comparing with prior art, this invention is able to provide the automatic configuration of the remote device and to efficiently lessen the frequency of the configuration of the remote device and to efficiently reduce the flow of the configuration and management of the network, thereby lowering down the cost of the management system and networking device of the operators for managing the remote terminal device.

### BRIEF DESCRIPTION OF THE DRAWINGS

Fig.1 illustrates a flowchart of main steps of a method according to the invention;
Fig.2 illustrates a block diagram of a method using the centralized identifier management according to the invention;
Fig.3 illustrates a block diagram of a method using the distributed identifier management according to the invention;
Fig.4 illustrates a block diagram of an apparatus of configuration parameter sets of remote devices in the centralized identifier management according to the invention;
Fig. 5 illustrates a block diagram of an apparatus of configuration parameter sets of remote devices in the distributed identifier management according to the invention.

### DETAILED DESCRIPTION OF EMBODIMENT(S)

This invention will be described in more detail, as incorporated with reference to the accompanying drawings and embodiments as follows.

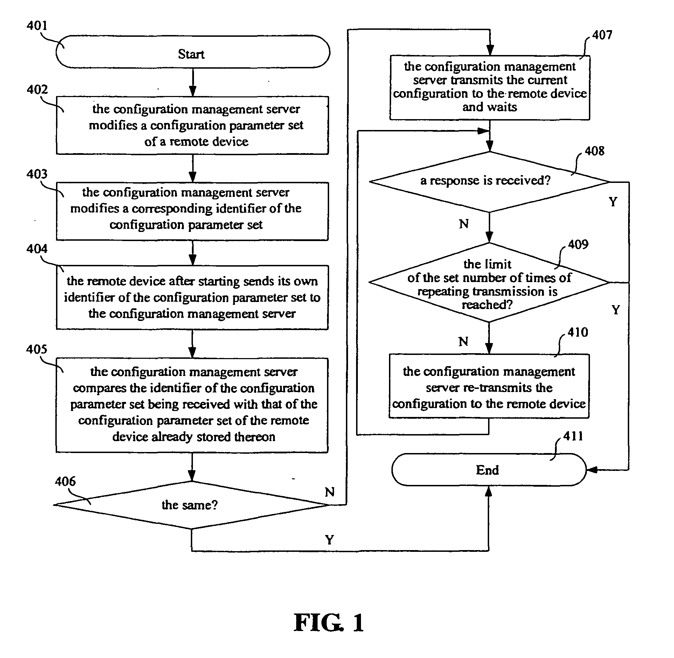

Fig.1 illustrates a flowchart of main steps of the method according to the invention; the detailed steps of the method in this invention are as follows:
Step 401, Start;
Step 402, the configuration management server modifies a configuration parameter set of a remote device;
Step 403, the configuration management server modifies a corresponding identifier of the configuration parameter set;
Step 404, the remote device after starting sends its own identifier of the configuration parameter set to the configuration management server;
Step 405, the configuration management server compares the identifier, being received, of the configuration parameter set with that, stored thereon on its own, of the configuration parameter set of the remote device;
Step 406, decides whether the above identifiers are the same or not: if yes then executes Step 411, or if not then executes Step 407;
Step 407, the configuration management server transmits the current configuration to the remote device and waits;
Step 408, decides whether the response is received or not: if yes then executes Step 411, or if not then executes Step 408;
Step 409, decides whether the limit of the set number of times of repeating transmission is met: if yes then executes Step 411, or if not then executes Step 410;
Step 410, the configuration management server re-transmits the configuration to the remote device and returns to Step 408;
Step 411, End.

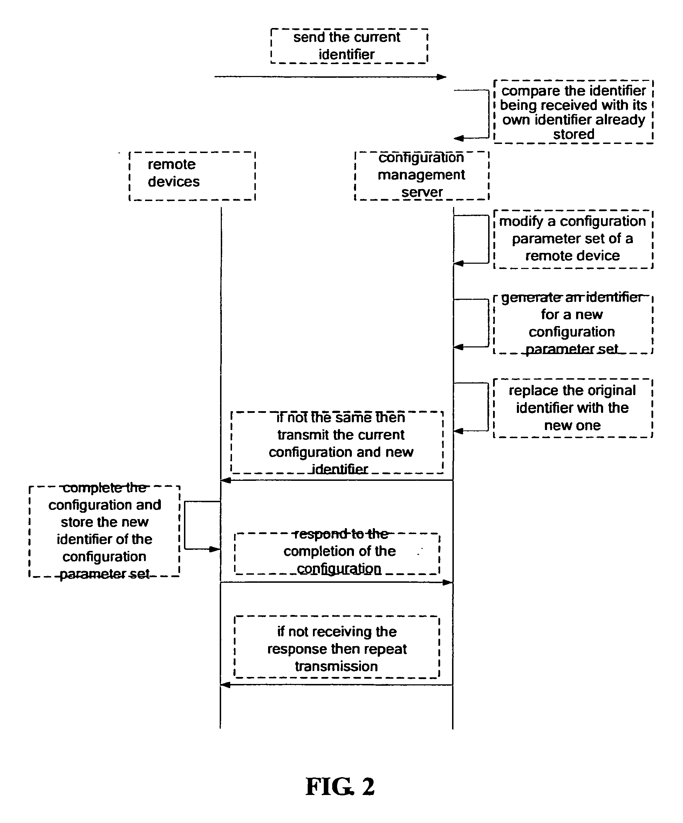

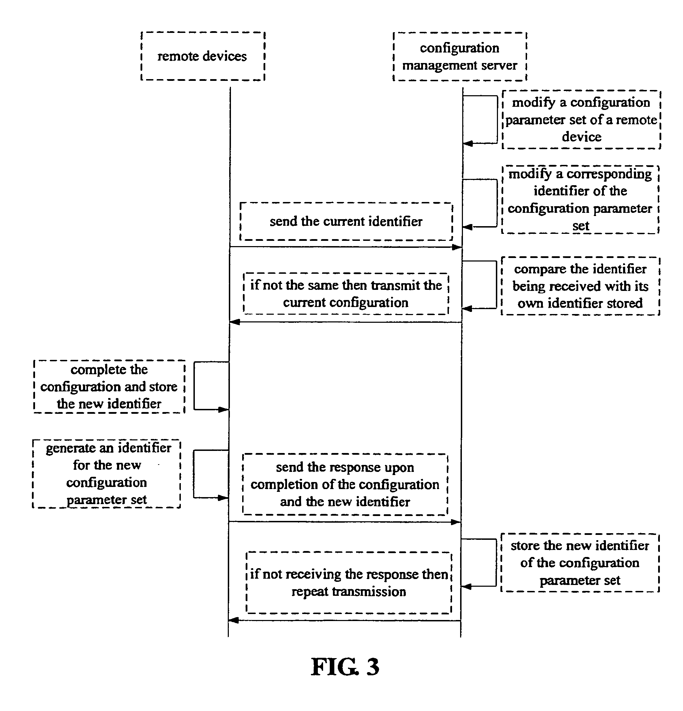

The configuration parameter set of each remote device has a different identifier set up, and each identifier is stored in the configuration management server and the corresponding remote device, respectively; Depending upon the different locations generated of the corresponding new identifiers after the configuration parameter set is updated, i.e., the determination on the side of the configuration management server or on the side of the remote device, the technical solutions of the present invention may be further divided into two embodiments: the centralized identifier management and the distributed identifier management. The two embodiments are described in more detail, as incorporated with Fig. 2 and Fig. 3, as follows respectively:

The centralized identifier management mainly means that, after the configuration management server modifies a configuration parameter set of a remote device, the new identifier of the configuration parameter set of that remote device is generated by the configuration management server. As shown in Fig. 2, the configuration management server, after updating a configuration of a remote device, generates a new identifier of a configuration parameter set for the new configuration parameter set according to an algorithm or method, and stores this new identifier and replaces the old one. The remote device, after starting up, sends its own current identifier of the configuration parameter set to the configuration management server, and then the configuration management server compares this identifier with its own stored identifier of the configuration parameter set of that remote device, if they are the same then the configuration management server does not operate further or otherwise the configuration management server sends the updated configuration parameter set of that remote device to the remote device for configuration, and waits for the response upon completion of the configuration. The configuration management server, while sending the configuration parameters to the remote device, transmits to the remote device the new identifier of the configuration parameter set generated by the configuration management server as well and then, stores this identifier on the side of the remote user. For the approach to using the centralized identifier management, because the identifier of its configuration parameter set is maintained universally by the configuration management server, the algorisms usable are easily unified and the chosen scope is also much larger. The specific algorisms mentioned above may be chosen appropriately in the specific use, either a combination of the parameters or a result of computation.

The distributed identifier management mainly refers to that, after the configuration management server modifies a configuration parameter set of a remote device, the new identifier of the configuration parameter set of that remote device, after its configuration is updated, is generated by itself. As shown in Fig. 3, although the configuration management server, after modifying the configuration parameter set of the remote device, updates the local identifier of that configuration parameter set as it does in the embodiment of the centralized identifier management, the updating is more flexible than the determining of a new identifier - only when there is a difference between the modified identifier and original identifier. For example, the configuration management server may simply clear the configuration parameter set of the remote device to "0" and then, if there is a difference compared the identifier of the configuration parameter set sent by the remote device after its start to the identifier ("0") of the configuration parameter set of the remote device stored in the configuration management server, it concludes that the reconfiguration of that remote device is necessary, although at this time, the identifier updated by the configuration management server is not the ultimate one updated of the configuration parameter set. The remote device, after starting up, sends its own stored identifier of the configuration parameter set to the configuration management server to make a comparison: if the identifier of the configuration parameter set of that remote device, which is stored on the side of the configuration management server, has been updated, then there is a resultant difference, and at this time, the configuration management server sends the configuration parameter set to the remote device, in order to configure and update it. After its configuration, the remote device according to its own algorithm, generates a new identifier for the new the configuration parameter set and, returns to the configuration management server that new identifier as a response upon completion of the configuration. Because the algorithm for generating new identifiers, taken by different remote devices, is different, conflict between the different identifiers of the remote devices may occur. In order to avoid the occurrence of such conflicts, some methods may be adopted for separation, e.g. the position information of the remote devices is defined as part of an identifier or part of an algorithm while the identifiers are being computed. Due to the appropriate methods selected for avoiding the occurrence of such conflicts, the distributed identifier management, compared with the centralized identifier management, may decrease the configuration management servers' requirements for the algorithm of the generation of identifiers. The configuration management server stores an identifier to the configuration parameter set considered as representative of a unique identifier of the configuration parameter set of a corresponding remote device. Moreover, in order to decrease the high probability of conflicts caused by different algorithms remote device terminals, the configuration management server may store that unique identifier, together with the position information of the remote device.

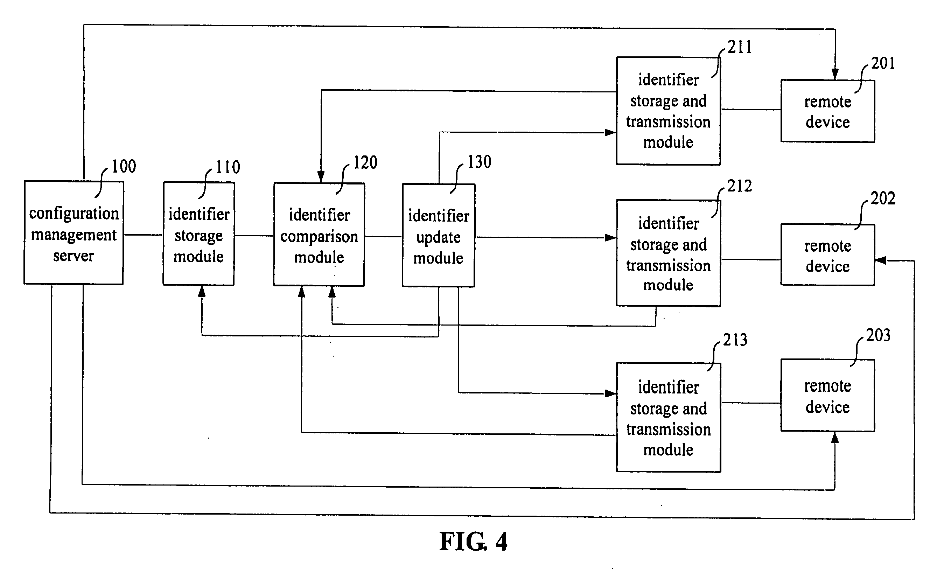

Fig.4 illustrates a block diagram of the apparatus of the configuration parameter set of the remote device using the centralized identifier management according to the invention. As shown in Fig. 4, on the side of configuration management server 100, there are provided identifier storage module 110, identifier comparison module 120 and identifier update module 130; whereas, on the side of remote devices 201,202 and 203, identifier storage and transmission modules 211, 212 and 213 are stored respectively. Below is described with reference to remote device 201: there is an identifier of the configuration parameter set of remote device 201 stored within identifier storage module 110; if configuration management server 100 modifies the configuration parameter set of remote device 201, then identifier update module 130 generates for the new configuration parameter set of remote device 201 a new identifier of the configuration parameter set, and replaces with that new identifier the original identifier of that remote device stored within identifier storage module 110; there is an identifier of the configuration parameter set of remote device 201 stored within identifier storage and transmission module 211, and after remote device 201 starts, identifier storage and transmission module 211 sends the current identifier of the configuration parameter set of remote device 201 to identifier comparison module 120; identifier comparison module 120 compares the received identifier of the configuration parameter set of remote device 201 to the identifier of the configuration parameter set of remote device 201 stored within identifier storage module 110: if the identifiers are the same then configuration management server 100 needn't update remote device 201, i.e., keeps unchanged the identifier of remote device 201 stored within identifier storage module 110; or if they are different then configuration management server 100 sends the new configuration parameter set to remote device 201, i.e., updates the configuration of remote device 201 while the new identifier as part of the configuration parameter set is sent to identifier storage and transmission module 211 and stored in identifier storage and transmission module 211, and further remote device 201, after its configuration is updated, sends a response upon completion of the configuration, or otherwise, if configuration management server 100 has not received the response upon completion of the configuration of remote device 201, then repeats for a set number of times.

In the embodiment as illustrated in Fig. 4, identifier storage module 110, identifier comparison module 120 and identifier update module 130 may be set up in configuration management server 100; identifier storage and transmission modules 211, 212 and 213 may be set up in remote devices 201,202 and 203, respectively.

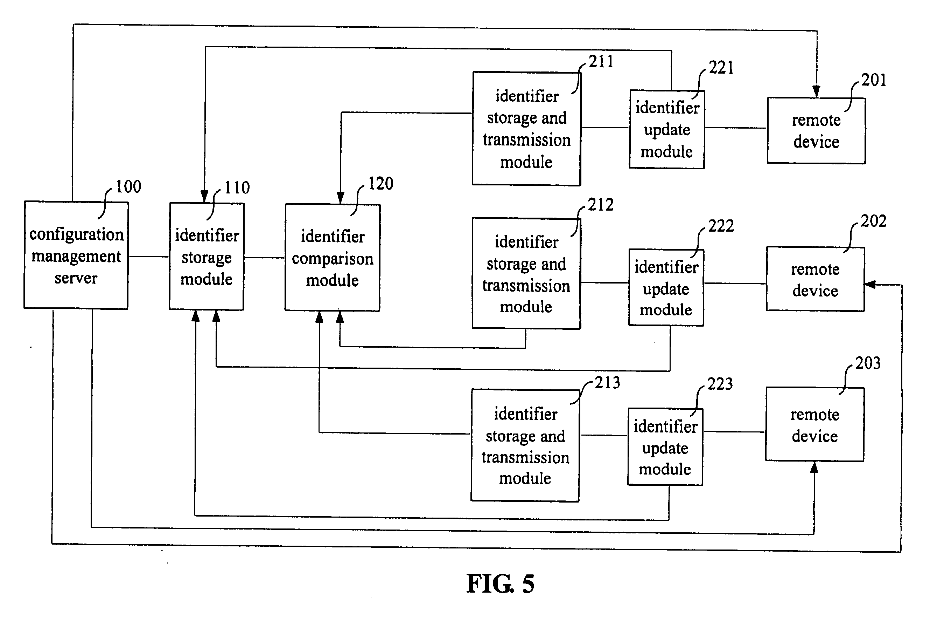

Fig.5 illustrates a block diagram of the apparatus using the distributed identifier management according to the invention. As shown in Fig.5, there are identifier storage module 110 and identifier comparison module 120 set up on the side of configuration management server 100; whereas there are identifier storage and transmission modules 211, 212 and 213 and identifier update modules 221, 222 and 223, set up in remote devices 201,202 and 203, respectively. Remote device 201, for example, is described below: the identifier of the configuration parameter set of remote device 201 is stored in identifier storage module 110; the identifier of the configuration parameter set of remote device 201 is stored in identifier storage and transmission module 211. When configuration management server 100 has modified the configuration of remote device 201, it also modifies the identifier of the configuration parameter set of remote device 201 stored in identifier storage module 110. Such a modification is not to determine the new identifier but only to make the modified identifier different from the original, e.g., simply cleared to "0". As such, after remote device 201 starts, identifier storage and transmission module 211 sends the current identifier of the configuration parameter set of remote device 201 to identifier comparison module 120; identifier comparison module 120 compares this received identifier of the configuration parameter set of remote device 201 to the identifier of the configuration parameter set of remote device 201 stored in identifier storage module 110 and they are not the same, and then it concludes that configuration management server 100 need to update the configuration of remote device 201 and thus, configuration management server 100 sends the new configuration parameter set to that remote device and the configuration of remote device 201 is updated; after the configuration of remote device 201, identifier update module 221 generates a new identifier for the new configuration parameter set and stores this new configuration parameter set in identifier storage module 110, after that, the newly generated identifier returns to configuration management server 100 as a response to the completion of the configuration.

In one embodiment of Fig.5, said identifier storage module 110 and said identifier comparison module 120 may be set up in configuration management server 100, and identifier storage and transmission module 211 and identifier update module 221 may be set up in remote devices 201.

Of course, the present invention may have many other embodiments. Various modifications and changes may be made by those of ordinary skills in the art with the benefit of this disclosure. Thus, those modifications and changes are of the scope of the issued claims and the equivalents thereof.

### Industrial applicability

This invention mainly applies to the management of configuration parameter sets of remote devices. The method according to the invention uses a unique identifier to identify a current configuration parameter set of each of the remote devices. The identifier varies with the content of the configuration parameter set. So, a remote device transmits its own identifier of the configuration parameter set to the configuration management server and compares it with the identifier of the configuration parameter set of the remote device stored in the configuration management server after starting. When the two identifiers are not the same, the configuration management server updates the configuration of the remote device. Otherwise the remote device operates with the original configuration. Because the interaction of the identifiers relatively significantly reduces the management flow of the network, the load of the management information in the network and the management system is efficiently lessened, thereby lowering down the costs of the operators for managing the remote devices, and ensuring the reliability of the configuration as well.

## Claims

1. A method for controlling the configuration of configuration parameter sets of remote devices, which is used for a configuration management server's control over the configuration of parameters of the remote terminal devices, **characterized in that** it uses identifiers to identify the current configuration parameter sets of the remote devices, wherein the identifiers vary with the contents of the configuration parameter sets, thereby controlling whether or not the remote devices are configured based upon whether or not the identifiers varied.

2. The method of claim 1, **characterized in that** it comprises the steps of:
a) each unique identifier is set up for each of the corresponding configuration parameter sets of the remote devices, and these identifiers are stored on the side of said configuration management server and in corresponding positions on the side of the remote devices, respectively;
b) if said configuration management server requires updating the configuration of a remote device, then it updates said remote device's configuration parameter set (402) and modifies said identifier of said remote device's configuration parameter set stored on the side of said configuration management server(403); and
if said configuration management server does not require updating said configuration of said remote device, then it keeps unchanged the originally stored identifier of said remote device;
c) said remote device, after starting, sends said current identifier of said configuration parameter set of its own to said configuration management server;
d) on the side of said configuration management server, an identifier of said remote device's configuration parameter set being received is compared with that of said remote device's configuration parameter set stored on the side of said configuration management server (405); and
if the two identifiers are the same, then it is not necessary to update said configuration of said remote device (411); and
if the two are not the same, then said configuration management server transmits a new configuration parameter set to said remote device (407), updates said configuration of said remote device and further updates said identifier on the side of the remote devices.

3. The method of claim 2, **characterized in that**, in d), said remote device sends to said configuration management server a response upon completion of said configuration when finishing updating said configuration (408); and if said configuration management server does not receive said response upon completion of said configuration of said remote device, it repeats transmission for a set number of times (409-410).

4. The method of claim 2, **characterized in that**,
in a), it sets up a different identifier for each of the configuration parameter sets of the remote devices from others and stores these identifiers on the side of said configuration management server, as well as storing them in the corresponding positions on the side of the remote devices, respectively;
in b), if said configuration management server requires updating the configuration of a remote device, then it updates said configuration parameter set of said remote device, generates a new identifier for said new configuration parameter set on the side of said configuration management server, and replaces with said new identifier the original one of said remote device stored on the side of said configuration management server; and
if said configuration management server does not require updating said configuration of said remote device, then it keeps unchanged the originally stored identifier of said remote device;
in d), on the side of said configuration management server, if an identifier of said remote device's configuration parameter set which is being received, is not the same as that of said remote device's configuration parameter set which is stored thereon, then said configuration management server transmits both the new configuration parameter set and the corresponding, new identifier to said remote device, updates said configuration of said remote device and stores said
new identifier on the side of the remote devices, and said remote device, after its configuration is updated, sends to said configuration management server a response upon completion of said configuration, and said configuration management server, if not receiving said response upon completion of said configuration of said remote device, repeats transmission for a set number of times.

5. The method of claim 2, **characterized in that**,
in a), it sets up identifiers for the configuration parameter sets of the remote devices and stores these identifiers on the side of the remote devices, as well as storing them on the side of said configuration management server;
in b), if said configuration management server requires updating the configuration of a remote device, then it modifies both said remote device's configuration parameter set stored on the side of said configuration management server and said identifier of said remote device's configuration parameter set stored on the side of said configuration management server; and if said configuration management server does not require updating said configuration of said remote device, then it keeps unchanged the originally stored identifier of said remote device on the side of said configuration management server;
in d), on the side of said configuration management server, if an identifier of said remote device's configuration parameter set which is being received, is not the same as that of said remote device's configuration parameter set which is stored thereon, then said configuration management server transmits to said remote device a new configuration parameter set as well as updating said configuration of said remote device, and then said remote device, after its configuration, generates a new identifier for said new configuration parameter set on the side of the remote devices and returns said new identifier to said configuration management server as a response upon completion of said configuration and stores it on the side of said configuration management server, and said configuration management server repeats transmission for a set number of times if not receiving said response upon completion of said configuration of said remote device.

6. The method of claim 5, **characterized in that**, in b), if said configuration management server requires updating said configuration of said remote device,
then it modifies said configuration parameter set of said remote device stored on the side of said configuration management server, as well as simply setting to "0" said identifier of said remote device's configuration parameter set stored on the side of said configuration management server.

7. The method of claim 5, **characterized In that**, In d), after said configuration of said remote device, it returns to said configuration management server an identifier of said configuration parameter set newly generated on the side of the remote devices as a response upon the completion of said configuration, and stores both said new identifier of said remote device and the position information of said remote device on the side of said configuration management server.

8. An apparatus for controlling the configuration of configuration parameter sets of remote devices (201-203), which is used for a configuration management server's (100) control over the configuration of parameters of the remote devices(201-203), **characterized in that** it is adapted to identifiers to identify the current configuration parameter sets of the remote devices (201-203), wherein the identifiers vary with the contents of the configuration parameter sets; thus controlling, by said configuration management server (100) whether or not the remote devices (201-203) are configured based upon whether or not the identifiers varied.

9. The apparatus of claim 8, **characterized in that** it has an identifier storage module and an identifier comparison module (120) set up on the side of said configuration management server (100), whereas it has identifier storage and transmission modules (211-213) set up on the side of the remote devices (201-203), wherein
the identifier storage module (110) is configured to store identifiers of configuration parameter sets of remote devices (201-203);
the identifier storage and transmission modules (211-213) are configured to store identifiers of configuration parameter sets of remote devices (201-203) and further are configured to, after a remote device (201-203) starts, send to the identifier comparison module (120) said current identifier of said configuration parameter set of said remote device (201-203); and
the identifier comparison module (120) is configured to compare an identifier of a remote device's configuration parameter set being received against that of said remote device's(201-203) configuration parameter set stored in the identifier storage module (110); and
if said configuration management server (100) requires updating the configuration of a remote device (201-203), then it updates said remote device's configuration parameter set and modifies said identifier of said remote device's configuration parameter set stored on the side of said configuration management server (100); and
if said configuration management server (100) does not require updating the configuration of said remote device (201-203), then it keeps unchanged the originally stored identifier of said remote device (201-203); and
if the two identifiers are identical in comparison in said identifier comparison module (120), then said configuration management server(100) is not necessary to update the configuration of said remote device (201-203); and
if the two are not identical in comparison, then said configuration management server (100) transmits said new configuration parameter set to said remote device (201-203), updates the configuration of said remote device (201-203) and further updates said identifier of said remote device (201-203) stored in said identifier storage and transmission module (211-213), thereby making said updated identifier identical to that of said remote device (201-203) stored in said identifier storage module (110).

10. The apparatus of claim 9, **characterized in that**,
it has an identifier update module (130) set up on the side of said configuration management server (100), if said configuration management server (100) requires updating the configuration of a remote device (201-203), then said identifier update module (130) generates a new identifier for said new configuration parameter set of said remote device (201-203), and replaces with said new identifier the original one of said remote device (201-203) stored in said identifier storage module (110); and
if the two identifiers are the same, then said configuration management server (100) does not require updating the configuration of said remote device (201-203); and
if the two are not the same, then said configuration management server (100) transmits the new configuration parameter set to said remote device (201-203) and, said identifier update module (130) sends said new identifier of said remote device (201-203) to an identifier storage and transmission module (211-213) and updates said configuration of said remote device (201-203) and stores said new identifier in said identifier storage and transmission module (211-213), and said remote device(201-203), after its configuration is updated, sends to said configuration management server (100) a response upon completion of said configuration, and said configuration management server (100) repeats transmission for a set number of times if not receiving said response upon completion of said configuration of said remote device (201-203).

11. The apparatus of claim 10, **characterized in that** said identifier storage module (110), said identifier update module (130) and said identifier comparison module(120) are set up within said configuration management server (100); and said identifier storage and transmission module (211-213) are set up in said remote device (201-203).

12. The apparatus of claim 9, **characterized in that**,
it also has an identifier update module (221-223) on the side of the remote devices (201-203), for generating a new identifier for a new configuration parameter of a remote device (201-203);
if the two identifiers are the same, compared within said identifier comparison module (120), then said configuration management server (100) does not require updating the configuration of said remote device (201-203); and
if the two are not the same, then said configuration management server (100) transmits said new configuration parameter set to said remote device (201-203) and updates said configuration of said remote device (201-203), and said identifier update module, after said configuration of said remote device (201-203) is updated, generates a new identifier for said new configuration parameter and returns said new identifier to said configuration management server (100) as a response upon completion of said configuration and stores said new identifier In said identifier storage module (110).

13. The apparatus of claim 12, **characterized in that** the identifier storage module and the identifier comparison module (120) are set up within said configuration management server (100); and the identifier update module and the identifier storage and transmission module (211-213) are set up within the corresponding remote devices (201-203), respectively.

## Patentansprüche

1. Verfahren zur Steuerung der Konfiguration von
Konfigurationsparametersätzen von Remotegeräten, welches für die Kontrolle eines Konfigurationsverwaltungsservers über die Konfiguration von Parametern der entfernten Endgeräte verwendet wird, **dadurch gekennzeichnet, dass** es Kennungen verwendet, um die aktuellen Konfigurationsparametersätze der Remotegeräte zu identifizieren, wobei die Kennungen mit den Inhalten der Konfigurationsparametersätze variierten, um dadurch zu kontrollieren, ob die Remotegeräte auf der Basis dessen, ob die Kennungen variierten oder nicht, konfiguriert sind oder nicht.

2. Verfahren nach Anspruch 1, **dadurch gekennzeichnet, dass** es ferner die folgenden Schritte umfasst:
a) jede eindeutige Kennung wird für jeden der entsprechenden Konfigurationsparametersätze der Remotegeräte eingerichtet, und diese Kennungen werden jeweils auf der Seite des Konfigurationsverwaltungsservers und in entsprechenden Positionen auf der Seite der Remotegeräte gespeichert;
b) wenn der Konfigurationsverwaltungsserver eine Aktualisierung der Konfiguration eines Remotegeräts anfordert, dann aktualisiert (402) er den Konfigurationsparametersatz des Remotegeräts und modifiziert (403) er die Kennung des auf der Seite des Konfigurationsverwaltungsservers gespeicherten Konfigurationsparametersatzes des Remotegeräts; und
wenn der Konfigurationsverwaltungsserver keine Aktualisierung der Konfiguration des Remotegeräts anfordert, dann hält er die ursprünglich gespeicherte Kennung des Remotegeräts unverändert aufrecht;
c) das Remotegerät sendet nach dem Starten die aktuelle Kennung des Konfigurationsparametersatzes von selbst an den Konfigurationsverwaltungsserver;
d) auf der Seite des Konfigurationsverwaltungsservers wird eine Kennung des Konfigurationsparametersatzes des Remotegeräts, die empfangen wird, mit der des Konfigurationsparametersatzes des Remotegeräts verglichen(405), die auf der Seite des Konfigurationsverwaltungsservers gespeichert ist; und
wenn die beiden Kennung gleich sind, dann ist es nicht notwendig, die Konfiguration des Remotegeräts zu aktualisieren (411); und
wenn die beiden nicht gleich sind, dann überträgt (407) der Konfigurationsverwaltungsserver einen neuen Konfigurationsparametersatz an das Remotegerät, aktualisiert die Konfiguration des Remotegeräts und aktualisiert ferner die Kennung auf der Seite der Remotegeräte.

3. Verfahren nach Anspruch 2, **dadurch gekennzeichnet, dass** in d) das Remotegerät bei Fertigstellung der Aktualisierung der Konfiguration eine Antwort auf den Abschluss der Konfiguration an den Konfigurationsverwaltungsserver sendet (408); und wenn der Konfigurationsverwaltungsserver die Antwort auf den Abschluss der Konfiguration des Remotegeräts nicht empfängt, wiederholt er die Übertragung für eine festgelegte Anzahl von Malen (409 - 410).

4. Verfahren nach Anspruch 2, **dadurch gekennzeichnet, dass** es in a) eine verschiedene Kennung für jeden der Konfigurationsparametersätze der Remotegeräte von anderen einrichtet und diese Kennungen jeweils auf der Seite des Konfigurationsverwaltungsservers sowie in den entsprechenden Positionen auf der Seite der Remotegeräte speichert;
der Konfigurationsverwaltungsserver in b) dann, wenn er eine Aktualisierung der Konfiguration eines Remotegeräts anfordert, den Konfigurationsparametersatz des Remotegeräts aktualisiert, eine neue Kennung für den neuen Konfigurationsparametersatz auf der Seite des Konfigurationsverwaltungsservers erzeugt und die ursprüngliche Kennung des Remotegeräts, die auf der Seite des Konfigurationsverwaltungsservers gespeichert ist, durch die neue ersetzt; und
der Konfigurationsverwaltungsserver dann, wenn er keine Aktualisierung der Konfiguration des Remotegeräts anfordert, die ursprünglich gespeicherte Kennung des Remotegeräts unverändert aufrechterhält;
der Konfigurationsverwaltungsserver in d) auf der Seite des Konfigurationsverwaltungsservers dann, wenn eine Kennung des Konfigurationsparametersatzes des Remotegeräts, welche empfangen wird, nicht gleich wie die des Konfigurationsparametersatzes des Remotegeräts ist, welche darauf gespeichert ist, sowohl den neuen Konfigurationsparametersatz als auch die entsprechende neue Kennung an das Remotegerät überträgt, die Konfiguration des Remotegeräts aktualisiert und die neue Kennung auf der Seite der Remotegeräte speichert, und das Remotegerät nach der Aktualisierung seiner Konfiguration eine Antwort auf den Abschluss der Konfiguration an den Konfigurationsverwaltungsserver sendet, und der Konfigurationsverwaltungsserver die Übertragung für eine festgelegte Anzahl von Malen wiederholt, wenn er die Antwort auf den Abschluss der Konfiguration des Remotegeräts nicht empfängt.

5. Verfahren nach Anspruch 2, **dadurch gekennzeichnet, dass**:
es in a) Kennungen für die Konfigurationsparametersätze der Remotegeräte einrichtet und diese Kennungen auf der Seite der Remotegeräte sowie auf der Seite des Konfigurationsverwaltungsserver speichert;
der Konfigurationsverwaltungsserver in b) dann, wenn er eine Aktualisierung der Konfiguration eines Remotegeräts anfordert, sowohl den auf der Seite des Konfigurationsverwaltungsservers gespeicherten Konfigurationsparametersatz des Remotegeräts als auch die Kennung des auf der Seite des Konfigurationsverwaltungsservers gespeicherten Konfigurationsparametersatzes des Remotegeräts modifiziert; und
der Konfigurationsverwaltungsserver dann, wenn er keine Aktualisierung der Konfiguration des Remotegeräts anfordert, die ursprünglich gespeicherte Kennung des Remotegeräts auf der Seite des Konfigurationsverwaltungsservers unverändert aufrechterhält;
der Konfigurationsvenivaltungsserver in d) auf der Seite des Konfigurationsverwaltungsservers dann, wenn eine Kennung des Konfigurationsparametersatzes des Remotegeräts, welche empfangen wird, nicht gleich wie die des Konfigurationsparametersatzes des Remotegeräts ist, welche darauf gespeichert ist, einen neuen Konfigurationsparametersatz an das Remotegerät überträgt sowie die Konfiguration des Remotegeräts aktualisiert, und das Remotegerät dann nach seiner Konfiguration eine neue Kennung für den neuen Konfigurationsparametersatz auf der Seite der Remotegeräte erzeugt und die neue Kennung als Antwort auf den Abschluss der Konfiguration an den Konfigurationsverwaltungsserver zurücksendet und sie auf der Seite des Konfigurationsverwaltungsservers speichert, und der Konfigurationsverwaltungsserver die Übertragung für eine festgelegte Anzahl von Malen wiederholt, wenn er die Antwort auf den Abschluss der Konfiguration des Remotegeräts nicht empfängt.

6. Verfahren nach Anspruch 5, **dadurch gekennzeichnet, dass** der Konfigurationsverwaltungsserver in b) dann, wenn er eine Aktualisierung des Remotegeräts anfordert, den auf der Seite des Konfigurationsverwaltungsservers gespeicherten Konfigurationsparametersatz des Remotegeräts modifiziert sowie die Kennung des auf der Seite des Konfigurationsverwaltungsservers gespeicherten Konfigurationsparametersatzes des Remotegeräts einfach auf "0" setzt.

7. Verfahren nach Anspruch 5, **dadurch gekennzeichnet, dass** das Remotegerät in d) nach seiner Konfiguration eine Kennung des auf der Seite der Remotegeräte neu erzeugten Konfigurationsparametersatzes als Antwort auf den Abschluss der Konfiguration an den Konfigurationsverwaltungsserver zurücksendet und sowohl die neue Kennung des Remotegeräts als auch die Positionsinformationen des Remotegeräts auf der Seite des Konfigurationsverwaltungsservers speichert.

8. Vorrichtung zum Steuern der Konfiguration von Konfigurationsparametersätzen von Remotegeräten (201 - 203), welche für die Kontrolle eines Konfigurationsverwaltungsservers (100) über die Konfiguration von Parametern der Remote-Endgeräte (201 - 203) verwendet wird, **dadurch gekennzeichnet, dass** sie so ausgelegt ist, dass sie Kennungen verwendet, um die aktuellen Konfigurationsparametersätze der Remotegeräte (201 - 203) zu identifizieren, wobei die Kennungen mit den Inhalten der Konfigurationsparametersätze variieren, um auf diese Weise durch den Konfigurationsverwaltungsserver (100) zu kontrollieren, ob die Remotegeräte (201 - 203) auf der Basis dessen, ob die Kennungen variierten oder nicht, konfiguriert sind oder nicht.

9. Vorrichtung nach Anspruch 8, **dadurch gekennzeichnet, dass** sie ein Kennungsspeichermodul und ein Kennungsvergleichsmodul (120) auf der Seite des Konfigurationsverwaltungsservers (100) eingerichtet aufweist, während sie Kennungsspeicher- und -übertragungsmodule (211- 213) auf der Seite der Remotegeräte (201 - 203) eingerichtet aufweist, wobei
das Kennungsspeichermodul (110) so konfiguriert ist, dass es Kennungen von Konfigurationsparametersätzen von Remotegeräten (201 - 203) speichert;
die Kennungsspeicher- und -übertragungsmodule (211 - 213) so konfiguriert sind, dass sie Kennungen von Konfigurationsparametersätzen von Remotegeräten (201 - 203) speichern, und ferner so konfiguriert sind, dass sie nach dem Start eines Remotegeräts (201 - 203) die aktuelle Kennung des Konfigurationsparametersatzes des Remotegeräts (201 - 203) an das Kennungsvergleichsmodul (120) senden; und
das Kennungsvergleichsmodul (120) so konfiguriert ist, dass es eine Kennung des Konfigurationsparametersatzes eines Remotegeräts, welche empfangen wird, mit der des im Kennungsspeichermodul (110) gespeicherten Konfigurationsparametersatzes des Remotegeräts (201 - 203) vergleicht; und
der Konfigurationsverwaltungsserver (100) dann, wenn er eine Aktualisierung der Konfiguration eines Remotegeräts (201 - 203) anfordert, den Konfigurationsparametersatz des Remotegeräts aktualisiert und die Kennung des auf der Seite des Konfigurationsverwaltungsservers (100) gespeicherten Konfigurationsparametersatzes des Remotegeräts modifiziert; und
der Konfigurationsverwaltungsserver (100) dann, wenn er keine Aktualisierung der Konfiguration des Remotegeräts (201 - 203) anfordert, die ursprünglich gespeicherte Kennung des Remotegeräts (201 - 203) unverändert aufrechterhält; und,
der Konfigurationsverwaltungsserver (100) dann, wenn die beiden Kennungen im Vergleich im Kennungsvergleichsmodul (120) identisch sind, nicht notwendig ist, um die Konfiguration des Remotegeräts (201 - 203) zu aktualisieren; und
der Konfigurationsverwaltungsserver (100) dann, wenn die beiden im Vergleich nicht identisch sind, den neuen Konfigurationsparametersatz an das Remotegerät (201 - 203) überträgt, die Konfiguration des Remotegeräts (201 - 203) aktualisiert und ferner die im Kennungsspeicher- und -übertragungsmodul (211 - 213) gespeicherte Kennung des Remotegeräts (201 - 203) aktualisiert, um dadurch die aktualisierte mit der im Kennungsspeichermodul (110) gespeicherten Kennung des Remotegeräts (201 - 203) identisch zu machen.

10. Vorrichtung Anspruch 9, **dadurch gekennzeichnet, dass** sie ein Kennungsaktualisierungsmodul (130) auf der Seite des Konfigurationsverwaltungsservers (100) eingerichtet aufweist, wobei das Kennungsaktualisierungsmodul (130) dann, wenn der Konfigurationsverwaltungsserver (100) eine Aktualisierung der Konfiguration eines Remotegeräts (201 - 203) anfordert, eine neue Kennung für den neuen Konfigurationsparametersatz des Remotegeräts (201 - 203) erzeugt und die ursprüngliche Kennung des Remotegeräts (201 - 203), die im Kennungsspeichermodul (110) gespeichert ist, durch die neue ersetzt; und
der Konfigurationsverwaltungsserver (100) dann, wenn die beiden Kennungen gleich sind, keine Aktualisierung der Konfiguration des Remotegeräts (201 - 203) anfordert; und
dann, wenn die beiden nicht gleich sind, der Konfigurationsverwaltungsserver (100) den neuen Konfigurationsparametersatz an das Remotegerät (201 - 203) überträgt, das Kennungsaktualisierungsmodul (130) die neue Kennung des Remotegeräts (201 - 203) an ein Kennungsspeicher- und - übertragungsmodul (211 - 213) sendet und die Konfiguration des Remotegeräts (201 - 203) aktualisiert und die neue Kennung im Kennungsspeicher- und -übertragungsmodul (211- 213) speichert, und das Remotegerät (201 - 203) nach der Aktualisierung seiner Konfiguration eine Antwort auf den Abschluss der Konfiguration an den Konfigurationsverwaltungsserver (100) sendet, und der Konfigurationsveraltungsserver (100) die Übertragung für eine festgelegte Anzahl von Malen wiederholt, wenn er die Antwort auf den Abschluss der Konfiguration des Remotegeräts (201 - 203) nicht empfängt.

11. Vorrichtung nach Anspruch 10, **dadurch gekennzeichnet, dass** das Kennungsspeichermodul (110), das Kennungsaktualisierungsmodul (130) und das Kennungsvergleichsmodul (120) innerhalb des Konfigurationsverwaltungsservers (100) eingerichtet sind, und das Kennungsspeicher- und -übertragungsmodul (211 - 213) im Remotegerät (201 - 203) eingerichtet ist.

12. Vorrichtung nach Anspruch 9, **dadurch gekennzeichnet, dass** sie außerdem ein Kennungsaktualisierungsmodul (221 - 223) auf der Seite der Remotegeräte (201 - 203) zum Erzeugen einer neuen Kennung für einen neuen Konfigurationsparameter eines Remotegeräts (201 - 203) aufweist;
der Konfigurationsverwaltungsserver (100) dann, wenn die beiden Kennungen, die innerhalb des Kennungsvergleichsmoduls (120) verglichen werden, identisch sind, keine Aktualisierung der Konfiguration des Remotegeräts (201 - 203) anfordert; und
der Konfigurationsverwaltungsserver (100) dann, wenn die beiden nicht gleich sind, den neuen Konfigurationsparametersatz an das Remotegerät (201 - 203) überträgt und die Konfiguration des Remotegeräts (201 - 203) aktualisiert, und das Kennungsaktualisierungsmodul nach der Aktualisierung der Konfiguration des Remotegeräts (201 - 203) eine neue Kennung für den neuen Konfigurationsparameter erzeugt und die neue Kennung als Antwort auf den Abschluss der Konfiguration an den Konfigurationsverwaltungsserver (100) zurücksendet und die neue Kennung im Kennungsspeichermodul (110) Speichert.

13. Vorrichtung nach Anspruch 12, **dadurch gekennzeichnet, dass** das Kennungsspeichermodul und das Kennungsvergleichsmodul (120) innerhalb des Konfigurationsverwaltungsservers (100) eingerichtet sind, und das Kennungsaktualisierungsmodul und das Kennungsspeicher- und -übertragungsmodul (211 - 213) jeweils innerhalb der entsprechenden Remotegeräte (201 - 203) eingerichtet sind.

## Revendications

1. Une méthode de contrôle de la configuration des ensembles de paramètres de configuration de dispositifs à distance, qui est utilisée pour un contrôle du serveur de gestion de la configuration sur la configuration de paramètres des dispositifs terminaux à distance, **caractérisée en ce qu'**elle utilise des identificateurs pour identifier les ensembles de paramètres de configuration actuels des dispositifs à distance, où les identificateurs varient avec le contenu des ensembles de paramètres de configuration, contrôlant ainsi, si les dispositifs à distance sont ou non configurés sur la base de si les identificateurs ont varié ou non.

2. La méthode de la revendication 1, **caractérisée en ce qu'**elle comprend les étapes de :
a) chaque identificateur unique est configuré pour chacun des ensembles de paramètres de configuration correspondants des dispositifs à distance, et ces identificateurs sont stockés sur le côté dudit serveur de gestion de la configuration et dans des positions correspondantes sur le côté des dispositifs à distance, respectivement ;
b) si ledit serveur de gestion de configuration nécessite une actualisation de la configuration d'un dispositif à distance, alors il actualise ledit ensemble de paramètre de configuration (402) dudit dispositif à distance et modifie ledit identificateur dudit ensemble de paramètre de configuration du dispositif à distance stocké sur le côté dudit serveur de gestion de configuration (403) ; et
si ledit serveur de gestion de configuration ne nécessite pas d'actualisation de ladite configuration dudit dispositif à distance, alors il laisse l'identificateur stocké à l'origine dudit dispositif à distance inchangé ;
c) ledit dispositif à distance, après avoir démarré, envoie ledit identificateur actuel dudit ensemble de paramètre de configuration propre à ce serveur de gestion de configuration ;
d) sur le côté dudit serveur de gestion de configuration, un identificateur dudit ensemble de paramètres de configuration du dispositif à distance étant reçu est comparé avec celui dudit ensemble de paramètres de configuration du dispositif à distance stocké sur le côté dudit serveur de gestion de configuration (405) ; et
si les deux identificateurs sont les mêmes, alors il n'est pas nécessaire d'actualiser ladite configuration dudit dispositif à distance (411) ; et
si les deux ne sont pas les mêmes, alors ledit serveur de gestion de configuration transmet un nouvel ensemble de paramètre de configuration à ce dispositif à distance (407), actualise ladite configuration dudit dispositif à distance et actualise de plus ledit identificateur sur le côté des dispositifs à distance.

3. La méthode de la revendication 2, **caractérisée en ce que**, dans d), ledit dispositif à distance envoie à ce serveur de gestion de configuration une réponse après réalisation de ladite configuration à la fin de l'actualisation de ladite configuration (408) ; et si ledit serveur de gestion de configuration ne reçoit pas ladite réponse après réalisation de ladite configuration dudit dispositif à distance, il répète la transmission pour un nombre de fois fixe (409-410).

4. La méthode de la revendication 2, **caractérisé en ce que**,
dans a), elle configure un identificateur différent pour chacun des ensembles de paramètre de configuration des dispositifs à distance à partir d'autres et stocke ces identificateurs sur le côté dudit serveur de gestion de configuration, tout en les stockant dans les positions correspondantes sur le côté des dispositifs à distance, respectivement ; dans b) si ledit serveur de gestion de configuration nécessite une actualisation de la configuration d'un dispositif à distance, alors il actualise ledit ensemble de paramètre de configuration dudit dispositif à distance, génère un nouvel identificateur pour ledit nouvel ensemble de paramètre de configuration sur le côté dudit serveur de gestion de configuration, et remplace par ledit nouvel identificateur celui d'origine dudit dispositif à distance stocké sur le côté dudit serveur de gestion de configuration ; et
si ledit serveur de gestion de configuration ne nécessite pas d'actualisation de ladite configuration dudit dispositif à distance, alors il laisse l'identificateur stocké à l'origine dudit dispositif à distance inchangé ;
dans d) sur le côté dudit serveur de gestion de configuration, si un identificateur dudit ensemble de paramètres de configuration du dispositif à distance qui est reçu n'est pas le même que celui dudit ensemble de paramètres de configuration du dispositif à distance qui y est stocké, alors ledit serveur de gestion de configuration transmet à la fois le nouvel ensemble de paramètre de configuration et le nouvel identificateur correspondant, à ce dispositif à distance, actualise ladite configuration dudit dispositif à distance et stocke ce nouvel identificateur sur le côté des dispositifs à distance, et ledit dispositif à distance, une fois sa configuration réalisée, envoie à ce serveur de gestion de configuration une réponse après réalisation de ladite configuration, et ledit serveur de gestion de configuration, s'il ne reçoit pas ladite réponse après réalisation de ladite configuration dudit dispositif à distance, répète la transmission pendant un nombre de fois fixe.

5. La méthode de la revendication 2, **caractérisée en ce que**,
dans a), elle configure des identificateurs pour les ensembles de paramètres de configuration des dispositifs à distance et stocke ces identificateurs sur le côté des dispositifs à distance, tout en les stockant sur le côté dudit serveur de gestion de configuration ;
dans b) si ledit serveur de gestion de configuration nécessite une actualisation de la configuration d'un dispositif à distance, alors il modifie à la fois ledit ensemble de paramètres de configuration du dispositif à distance stocké sur le côté dudit serveur de gestion de configuration et ledit identificateur dudit ensemble de paramètre de configuration du dispositif à distance stocké sur le côté dudit serveur de gestion de configuration ; et
si ledit serveur de gestion de configuration ne nécessite pas d'actualisation de ladite configuration dudit dispositif à distance, alors il laisse l'identificateur stocké à l'origine dudit dispositif à distance inchangé sur le côté dudit serveur de gestion de configuration ;
dans d) sur le côté dudit serveur de gestion de configuration, si un identificateur dudit ensemble de paramètres de configuration du dispositif à distance qui est reçu n'est pas le même que celui dudit ensemble de paramètres de configuration du dispositif à distance qui y est stocké, alors ledit serveur de gestion de configuration transmet à ce dispositif à distance un nouvel ensemble de paramètre de configuration tout en actualisant ladite configuration dudit dispositif à distance, puis ledit dispositif à distance, après sa configuration, génère un nouvel identificateur pour ledit nouvel ensemble de paramètres de configuration sur le côté des dispositifs à distance et renvoie ce nouvel identificateur à ce serveur de gestion de configuration comme réponse après réalisation de ladite configuration, et il le stocke sur le côté dudit serveur de gestion de configuration, et ledit serveur de gestion de configuration répète la transmission pendant un nombre de fois fixe s'il ne reçoit pas ladite réponse après réalisation de ladite configuration dudit dispositif à distance.

6. La méthode de la revendication 5, **caractérisée en ce que**, dans b), si ledit serveur de gestion de configuration nécessite une actualisation de ladite configuration dudit dispositif à distance, alors il modifie ledit ensemble de paramètres de configuration dudit dispositif à distance stocké sur le côté dudit serveur de gestion de configuration, tout en mettant simplement à « 0 » ledit identificateur dudit ensemble de paramètre de configuration du dispositif à distance stocké sur le côté dudit serveur de gestion de configuration.

7. La méthode de la revendication 5, **caractérisée en ce que**, dans d), après ladite configuration dudit dispositif à distance, il renvoie à ce serveur de gestion de configuration un identificateur dudit ensemble de paramètres de configuration nouvellement généré sur le côté desdits dispositifs à distance comme réponse après réalisation de ladite configuration, et stocke à la fois ledit nouvel identificateur dudit dispositif à distance et l'information sur la position dudit dispositif à distance sur le côté dudit serveur de gestion de configuration.

8. Un appareil pour contrôler la configuration d'ensembles de paramètres de configuration de dispositifs à distance (201-203), qui est utilisé pour un contrôle du serveur de gestion de configuration (100) sur la configuration des paramètres des dispositifs à distance (201-203), **caractérisé en ce qu'**il est adapté pour utiliser des identificateurs pour identifier les ensembles de paramètres de configuration actuels des dispositifs à distance (201-203), où les identificateurs varient avec le contenu des ensembles de paramètres de configuration ; contrôlant ainsi, par ledit serveur de gestion de configuration (100) si les dispositifs à distance (201-203) sont configurés ou non sur la base de si les identificateurs ont varié ou non.

9. L'appareil de la revendication 8, **caractérisé en ce qu'**il possède un module de stockage d'identificateur et un module de comparaison d'identificateur (120) configuré sur le côté dudit serveur de gestion de configuration (100), tandis qu'il possède des modules de transmission et de stockage d'identificateur (211-213) configurés sur le côté des dispositifs à distance (201-203) où
Le module de stockage d'identificateur (110) est configuré pour stocker des identificateurs des ensembles de paramètres de configuration des dispositifs à distance (201-203) ;
Les modules de transmission et de stockage d'identificateur (211-213) sont configurés pour stocker des identificateurs d'ensembles de paramètre de configuration des dispositifs à distance (201-203) et sont de plus configurés pour, après le démarrage d'un dispositif à distance (201-203), envoyer au module de comparaison d'identificateur (120) ledit identificateur actuel dudit ensemble de paramètres de configuration dudit dispositif à distance (201-203) ; et
Le module de comparaison d'identificateur (120) est configuré pour comparer un identificateur d'un ensemble de paramètre de configuration du dispositif à distance étant reçu avec celui dudit ensemble de paramètre de configuration du dispositif à distance (201-203) stocké dans le module de stockage d'identificateur (110) ; et Si ledit serveur de gestion de configuration (100) nécessite une actualisation de la configuration d'un dispositif à distance (201-203), alors il actualise ledit ensemble de paramètres de configuration du dispositif à distance et modifie ledit identificateur dudit ensemble de paramètres de configuration du dispositif à distance stocké sur le côté dudit serveur de gestion de configuration (100) ; et
Si ledit serveur de gestion de configuration (100) ne nécessite pas d'actualisation de la configuration dudit dispositif à distance (201-203), alors il laisse l'identificateur stocké à l'origine dudit dispositif à distance (201-203) inchangé ; et
Si les deux identificateurs sont identiques en comparaison dans ledit module de comparaison (120), alors ledit serveur de gestion de configuration (100) n'est pas nécessaire pour actualiser la configuration dudit dispositif à distance (201-203) ; et
Si les deux ne sont pas identiques en comparaison, alors ledit serveur de gestion de configuration (100) transmet ledit nouvel ensemble de paramètres de configuration à ce dispositif à distance (201-203), actualise la configuration dudit dispositif à distance (201-203) et actualise de plus ledit identificateur dudit dispositif à distance (201-203) stocké dans ledit module de transmission et de stockage (211-213), rendant ainsi ledit identificateur actualisé identique à celui dudit dispositif à distance (201-203) stocké dans ledit module de stockage d'identificateur (110).

10. L'appareil de la revendication 9, **caractérisé en ce que**,
Il possède un module d'actualisation d'identificateur (130) configuré sur le côté dudit serveur de gestion de configuration (100), si ledit serveur de gestion de configuration (100) nécessite une actualisation de la configuration d'un dispositif à distance (201-203), puis ledit module d'actualisation d'identificateur (130) génère un nouvel identificateur pour ledit nouvel ensemble de paramètres de configuration dudit dispositif à distance (201-203), et remplace par ledit nouvel identificateur celui d'origine dudit dispositif à distance (201-203) stocké dans ledit module de stockage d'identificateur (110) ; et
Si les deux identificateurs sont les mêmes, alors ledit serveur de gestion de configuration (100) ne nécessite pas d'actualisation de la configuration dudit dispositif à distance (201-203) ; et
Si les deux ne sont pas les mêmes, alors ledit serveur de gestion de la configuration (100) transmet le nouvel ensemble de paramètres de configuration à ce dispositif à distance (201-203) et, ledit module d'actualisation d'identificateur (130) envoie ledit nouvel identificateur dudit dispositif à distance (201-203) à un module de transmission et de stockage d'identificateur (211 -213) et actualise ladite configuration dudit dispositif à distance (201-203) et stocke ledit nouvel identificateur dans ledit module de transmission et de stockage d'identificateur (211-213), et ledit dispositif à distance (201-203), après avoir actualisé sa configuration, envoie à ce serveur de gestion de configuration (100) une réponse après réalisation de ladite configuration, et ledit serveur de gestion de configuration (100) répète la transmission pour un nombre de fois fixe s'il ne reçoit pas ladite réponse après la réalisation de ladite configuration dudit dispositif à distance (201-203).

11. L'appareil de la revendication 10, **caractérisé en ce que** ledit module de stockage d'identificateur (110), ledit module d'actualisation d'identificateur (130) et ledit module de comparaison d'identificateur (120) sont configurés dans ledit serveur de gestion de la configuration (100); et lesdits modules de transmission et de stockage d'identificateur (211-213) sont configurés dans ledit dispositif à distance (201-203).

12. L'appareil de la revendication 9, **caractérisé en ce que**,
Il possède également un module d'actualisation d'identificateur (221-223) sur le côté des dispositifs à distance (201-203), pour générer un nouvel identificateur pour un nouveau paramètre de configuration d'un dispositif à distance (201-203) ;
Si les deux identificateurs sont les mêmes, comparés dans ledit module de comparaison d'identificateur (120), alors ledit serveur de gestion de configuration (100) ne nécessite pas d'actualisation de la configuration dudit dispositif à distance (201-203) ; et
Si les deux ne sont pas les mêmes, alors ledit serveur de gestion de configuration (100) transmet ledit nouvel ensemble de paramètres de configuration à ce dispositif à distance (201-203) et actualise ladite configuration dudit dispositif à distance (201-203), et ledit module d'actualisation d'identificateur, après l'actualisation de ladite configuration dudit dispositif à distance (201-203), génère un nouvel identificateur pour ledit nouveau paramètre de configuration et renvoie ledit nouvel identificateur à ce serveur de gestion de configuration (100) comme réponse après réalisation de ladite configuration et stocke ledit nouvel identificateur dans ledit module de stockage d'identificateur (110).

13. L'appareil de la revendication 12, **caractérisé en ce que** le module de stockage d'identificateur et le module de comparaison d'identificateur (120) sont configurés dans ledit serveur de gestion de configuration (100) ; et le module d'actualisation d'identificateur et les modules de transmission et de stockage d'identificateur (211-213) sont configurés dans les dispositifs à distance correspondants (201-203), respectivement.
